# EUROPÄISCHE PATENTSCHRIFT

(11) **EP 1 238 226 B1**
(45) Veröffentlichungstag und Bekanntmachung des Hinweises auf die Patenterteilung: **25.05.2005**
(21) Anmeldenummer: 01982388.9
(22) Anmeldetag: 02.10.2001
(51) Int. Cl.: F16L 51/02, F16L 27/111, F01N 7/18

(54) **FLEXIBLES LEITUNGSELEMENT**
FLEXIBLE PIPE ELEMENT
ELEMENT DE CONDUITE FLEXIBLE

(30) Priorität: 04.10.2000 DE 20017036 U
(43) Veröffentlichungstag der Anmeldung: 11.09.2002
(73) Patentinhaber: IWKA Balg- und Kompensatoren Technologie GmbH, 76297 Stutensee (DE)
(72) Erfinder: GÖDEL, Frank-Uwe, 76297 Stutensee (DE); SALZER, Georg, 68753 Waghäusel (DE)
(74) Vertreter: Lempert, Jost, Dipl.-Phys. Dr. rer.nat.
(86) Internationale Anmeldenummer: PCT/EP2001/011375
(87) Internationale Veröffentlichungsnummer: WO 2002/029302

(56) Entgegenhaltungen:
- EP-A- 0 289 815
- EP-A- 0 561 211
- EP-A- 1 010 872
- DE-A- 19 848 451
- US-A- 3 204 666
- US-A- 5 456 291

## Beschreibung

Die Erfindung betrifft ein flexibles Leitungselement.

Derartige flexible Leitungselemente, insbesondere für Abgasleitungen von Verbrennungsmotoren bei Kraftfahrzeugen, weisen im allgemeinen einen schraubengangförmigen oder ringgewellten Balg und einen an den Balg koaxial angrenzenden, spiralförmig gewickelten oder mehrere Ringsegmente aufweisenden Agraffschlauch auf, wobei die spiralförmige Wicklung bzw. die Ringsegmente des Agraffschlauchs mit einem im wesentlichen S-förmiges Querschnittsprofil ausgestattet sind, mittels dessen axial benachbarte Elemente der spiralförmigen Wicklung bzw. axial benachbarte Ringsegmente des Agraffschlauchs ineinander eingreifen. Sie werden als Zwischenstücke in die Abgasleitung von Kraftfahrzeugen eingebaut, die üblicherweise fest, gegebenenfalls unter Einschaltung flexibler Stützteile, am Fahrzeugboden installiert ist, um Bewegungen und Schwingungen aufzunehmen und von der Weiterleitung an benachbarte Bauteile abzukoppeln, wie sie von der elastisch gelagerten Antriebsmaschine, Bewegungen des Fahrzeugs, temperaturbedingten Längenänderungen etc. entstehen.

Nachteilig ist insbesondere die durch den Agraffschlauch bedingte begrenzte Bewegungsfähigkeit des Leitungselements, was bei Erreichen der maximal möglichen axialen Länge des Agraffschlauchs zu einer Verschlechterung der Entkopplungseigenschaften des Leitungselements und zur Weiterleitung von Lastwechseln des Motors an die Abgasanlage führt, wodurch eine unangenehme Geräuschentwicklung verursacht wird. Ferner erfordert die eingeschränkte Beweglichkeit solcher Leitungselemente in der Regel eine verschiebbar am Unterboden des Kraftfahrzeugs aufgehängte Abgasanlage, die zum Aufnehmen von Bewegungen des in Extremstellungen blockierten Leitungselements in der Lage ist.

Ein gattungsgemäßes Leitungselement ist aus der EP 1 010 872 A1 bekannt. Dieses sowie weitere bekannte Leitungselement Leitungselemente (EP 0 903 528 A1, EP 0 709 558 A1, DE 296 09 293 U1) weisen darüber hinaus zumeist ein außenseitig angeordnetes Metallgeflecht auf, um den Balg vor mechanischer Einwirkung von außen und vor übermäßiger Längung zu schützen. Nachteilig ist, dass ein solches Geflecht sich bei Längenerweiterungen bzw. -verkürzungen des Leitungselements radial ausdehnt bzw. zusammenzieht. Liegt das Geflecht z. B. an dem angrenzenden Balg an, so ist das Leitungselement einerseits zusätzlich für weitere axiale Ausdehnung blockiert, andererseits für Lateral- und Angularbewegungen deutlich verhärtet, so dass in einem solchen Zustand des Leitungselements Schwingungsbewegungen an die Abgasleitung des Kraftfahrzeugs weitergeleitet werden. Steht das Geflecht hingegen von dem angrenzenden Balg radial ab, so kann es je nach eingeleiteten Schwingungen des Motors zu einem Anschlagen an dem Balg und/oder benachbarten Fahrzeugteilen kommen, was in einer unangenehmen Geräuschentwicklung resultiert.

Die EP 0 681 096 A1 beschreibt ein flexibles Leitungselement mit einem Balg, bei dem das außenseitig angeordnete Metallgeflecht durch ein Gestricke oder Gewirke ersetzt ist, wodurch die Entwicklung störender Schlaggeräusche seitens des Metallgeflechts verhindert wird. Ebenfalls ist das Gestricke oder Gewirke in der Lage, Axialbewegungen des Balges weich abzustützen, da die Verschiebbarkeit der Maschen sowohl in Zug- als auch in Druckrichtung auf Grenzen stößt, die jedoch verhältnismäßig weich sind. Gleichwohl besteht bei einem derartigen Leitungselement die Gefahr eine unzeitigen Versagens insbesondere des Balges, da durch das Gestricke oder Gelege allein eine unzureichende Abstützung gegeben ist. Zum Schutz des Balges ist daher bevorzugt die Anordnung eines koaxial von dem Balg umgebenen Innenschutzrohrs vorgesehen, wodurch die Beweglichkeit des Leitungselements, insbesondere hinsichtlich Angularbewegungen, wiederum erheblich eingeschränkt ist.

Die DE 296 09 293 U1 beschreibt ein flexibles Leitungselement mit einem Balg und sowohl einem diesen unmittelbar umgebenden Gestricke als auch einem außenseitig angeordneten Metallgeflecht, welches gleichfalls die genannten Nachteile aufweist.

Der DE 198 48 451 A1 ist ein flexibles Leitungselement entnehmbar, bei dem zwischen dem Balg und wenigstens einem Zusatzelement, wie einem Agraffschlauch bzw. einem Metallgeflecht, Abstandhalter angeordnet sind, welche den Balg wirksam bedämpfen. Auch dieses Leitungselement weist jedoch für viele Anwendungsfälle eine nur unzureichende Beweglichkeit auf.

Der Erfindung liegt die Aufgabe zugrunde, ein flexibles Leitungselement vorzuschlagen, welches unter Vermeidung eines unzeitigen Versagens des Balges eine erhöhte Beweglichkeit bei gleichzeitig guten Entkopplungseigenschaften im hoch- und niederfrequenten Bereich, insbesondere sowohl für Schwingungen kleiner Amplitude als auch Lastwechselschwingungen großer Amplitude des Motors, aufweist.

Erfindungsgemäß wird diese Aufgabe mit einem flexiblen Leitungselement der eingangs genannten Art durch die Merkmalskombination des Anspruchs 1 gelöst.

Durch die erfindungsgemäße Ausgestaltung ist der Balg einerseits sowohl in Axial- als auch in Radialrichtung hinreichend von dem Agraffschlauch abgestützt, so dass ein unzeitiges Versagen desselben zuverlässig verhindert wird. Andererseits ist durch die Gesamtsteifigkeit des erfindungsgemäßen Leitungselements von höchstens 5 N/mm insbesondere eine seitens der Automobilindustrie erwünschte feste Anordnung der Abgasanlage am Unterboden des Kraftfahrzeugs möglich , da es thermisch oder mechanisch bedingte Distanz- und Winkelveränderungen zwischen dem Motor und der Abgasanlage zuverlässig aufnimmt.

Die zwischen dem Balg und dem Agraffschlauch lokal angeordneten Abstandhalter dienen zur Vermeidung eines Kontaktes zwischen dem Balg und dem Agraffschlauch infolge Schwingungsbewegungen des Kraftfahrzeuges und einer dadurch bedingten Geräuschentwicklung, wie es an sich aus der DE 198 48 451 A1 bekannt ist. Durch die lokalen Abstandhalter wird ein gegenseitiges Anschlagen von Balg und angrenzendem Agraffschlauch zuverlässig verhindert, indem bei kritischen Anregungsfrequenzen, insbesondere bei den Eigenfrequenzen dieser Komponenten, eine direkte Kollision und damit eine Geräuschemission vermieden wird.

Der außenseitig angeordnete Gestrickeschlauch schützt das flexible Leitungselement vor äußeren Einwirkungen, wie mechanischen Beeinträchtigungen während der Montage oder Steinschlag während des Betriebs, ohne seine Beweglichkeit zu beeinträchtigen. Ein solcher hochflexibler Gestrickeschlauch liegt an dem innenseitig angrenzenden Element, z. B. zumindest an den äußeren Wellenbergen des Balges, über dessen gesamte Länge hin an, so dass eine unerwünschte Geräuschentwicklung desselben infolge Schwingungsbewegungen zuverlässig vermieden wird.

Wie bereits erwähnt, weisen die spiralförmige Wicklung bzw. die Ringsegmente des Agraffschlauchs ein im wesentlichen S-förmiges Querschnittsprofil auf, mittels dessen jeweils axial benachbarte Elemente der spiralförmigen Wicklung bzw. axial benachbarte Ringsegmente des Agraffschlauchs ineinander eingreifen. In bevorzugter Ausführung ist dabei vorgesehen, dass das im wesentlichen S-formige Querschnittsprofil der spiralförmigen Wicklung bzw. der Ringsegmente des Agraffschlauchs einen zentralen Abschnitt mit zwei jeweils an einem Ende desselben angeordneten, sich im wesentlichen in Axialrichtung erstreckenden Stegen aufweist, an die sich jeweils ein sich in Richtung des zentralen Abschnitts erstreckender, im wesentlichen in Axialrichtung angeordneter, endständiger Steg anschließt, wobei der Radialabstand der Stege größer als die radiale Stärke der endständigen Stege und der Axialabstand zwischen dem zentralen Abschnitt und den Brücken größer als die Axiallänge der endständigen Stege ist. Durch diese Ausgestaltung wird zwischen jeder spiralförmigen Wicklung bzw. zwischen jedem der ringförmigen Segmente des Agraffschlauchs sowohl in Axial- als auch in Radialrichtung ein weicher Anschlag gebildet, um einerseits Extremstellungen des Balges, wie Biegungen, Längungen, Stauchungen etc., zu verhindern. Andererseits wird über die Gesamtlänge des Leitungselements eine erhöhte Beweglichkeit in Axial- und Radialrichtung sichergestellt, da axial benachbarte Elemente bzw. Segmente des Agraffschlauchs Relativbewegungen ausführen können. Es sind insbesondere auch Angularbewegungen möglich, deren Maximalwert durch das Verhältnis des Radialabstandes der Stege zur radialen Stärke der endständigen Stege bzw. das Verhältnis des Axialabstandes zwischen dem zentralen Abschnitt und den Brücken zur Axiallänge der endständigen Stege des im wesentlichen S-förmigen Querschnittprofils einstellbar ist. Durch den Eingriff der jeweils axial benachbarten Elemente der spiralförmigen Wicklung bzw. der axial benachbarten Ringsegmente des Agraffschlauchs unter sowohl axialem als auch radialem Spiel wird also eine im Vergleich zum Stand der Technik erheblich erhöhte Beweglichkeit bezüglich Axial-, Radial- und Angularbewegungen des Leitungselements gewährleistet, so dass eine vollständige Entkopplung sowohl von Schwingungen kleiner Amplitude als auch von Lastwechselschwingungen großer Amplitude des Motors sichergestellt ist.

Das Querschnittprofil ist vorzugsweise zum Zentrum des zentralen Abschnitts spiegelsymmetrisch, um eine gleichmäßige Beweglichkeit des Leitungselements in jede Richtung zu ermöglichen.

Während die Stege des Querschnittsprofils vorzugsweise parallel in Axialrichtung des Leitungselements angeordnet sind, ist der zentrale Abschnitt mit Vorzug eine in Radialrichtung angeordnete Brücke oder eine bezüglich der Radialrichtung geneigt angeordnete Brücke, wobei in letztgenanntem Fall die Brücke bevorzugt in Richtung der endseitig an derselben angeordneten Stege geneigt ist.

Je nach erwünschter Beweglichkeit des flexiblen Leitungselements beträgt der Radialabstand der Stege bevorzugt das 1,1- bis 3-fache, insbesondere das 1,2- bis 2-fache der radialen Stärke der endständigen Stege und der Axialabstand zwischen dem zentralen Abschnitt und den Brücken das 1,05- bis 1,9-fache, insbesondere das 1,1- bis 1,8-fache, der Axiallänge der endständigen Stege.

Die Abstandhalter sind vorzugsweise streifenförmig, so dass bei dem ohnehin vorhandenen Ringraum zwischen Balg und Agraffschlauch die äußeren Abmessungen des Leitungselements praktisch nicht beeinflusst werden. Die lokale Anwendung, insbesondere in Streifenform reicht in der Regel zur Erzielung der gewünschten Leistung aus, so dass gegenüber einem vollflächig eingebrachten Abstandhalter eine hohe Materialersparnis gegeben ist. Aufgrund ihres streifenförmigen Charakters sind die Abstandhalter ferner flexibler als ein über die gesamte Mantelfläche einer Komponente aufgebrachter Abstandhalter, so dass dem Leitungselement hinsichtlich Axial-, Lateral- und Angularbeweglichkeit keine Grenzen gesetzt sind.

Die Abstandhalter können an einem oder beiden zylindrischen Anschlussenden des Leitungselements fest mit dem Balg und/oder dem Agraffschlauch, z. B. über zylindrische Ringe, gehalten sein oder lose zwischen dem Balg und dem Agraffschlauch angeordnet sein. So können die Abstandhalter beispielsweise an beiden Anschlussenden des Leitungselements festgelegt, z. B. verpresst sein, um ein Ausweichen bzw. Verschieben während des Betriebs zu verhindern.

Die streifenförmigen Abstandhalter können in einfacher Weise um das Zusatzelement herumgewickelt sein, wobei sie sowohl in Radial- als auch in Axialrichtung oder schraubengangförmig um die an den Balg angrenzende Mantelfläche des Agraffschlauchs angeordnet sein können. Die Abstandhalter können symmetrisch um die an den Balg angrenzende Mantelfläche des Agraffschlauchs und/oder aus Gründen der Materialersparnis gezielt an besonders schwingungsempfindlichen Bereichen des Leitungselements, z. B. asymmetrisch zwischen dem Balg und dem Agraffschlauch angeordnet sein.

Während die Abstandhalter grundsätzlich einlagig ausgebildet sein können, ist gemäß einer bevorzugten Ausführungsform zur optimalen Dämpfung des Leitungselements vorgesehen, die Abstandhalter gekreuzt und/oder zwei- oder mehrlagig zwischen dem Balg und dem Agraffschlauch anzuordnen. Je nach Abstand zwischen den Streifen der Abstandhalter ist auch bei einer mehrlagigen Anordnung derselben weniger Material als bei einem flächigen Abstandhalter erforderlich, wobei insbesondere bei einer unterschiedlichen Ausrichtung der Streifen, z. B. sowohl axial als auch schraubengangförmig, eine optimale Dämpfungswirkung des Leitungselements erzielt wird.

Die Abstandhalter bestehen bevorzugt im wesentlichen aus Glas- und/oder Mineralfaser, wobei sie zweckmäßig als Gewebe, Gestricke, Geflecht oder als Vlies, insbesondere als Streifen-Vlies, ausgebildet sind.

Alternativ oder zusätzlich können die Abstandhalter auch im wesentlichen aus Metall bestehen, beispielsweise aus Draht, Metallkissen, Streckmetall bzw. Blech oder Metallschaum. Mit Metallschaum ist hierbei ein mit einem Treibmittel versetztes und somit aufschäumbares Metall gemeint, welches aus einem Metallpulver und einem Treibmittel, z. B. Titanhydrid, unter Erhitzen und Verdichten hergestellt wird. Ist der Abstandhalter aus Blech gebildet, so kann er zum Erzielen einer erhöhten Elastizität bevorzugt perforiert sein.

Des weiteren sind z. B. Abstandhalter aus Kunststoff denkbar.

Die Reibungskraft des Gestrickeschlauchs auf den Balg beträgt mit Vorzug nur 0,5 bis 5 N, insbesondere etwa 1 bis 3 N, so dass die Beweglichkeit des Balges praktisch nicht beeinträchtigt wird und der Gestrickeschlauch gleichzeitig stets an dem Balg anliegt. Die Reibungskraft ist z. B. auf einfache Weise über den Innendurchmesser des Gestrickeschlauchs bzw. die durch diesen auf den Balg bewirkte Normalkraft einstellbar.

Um den Gestrickeschlauch zuverlässig festzulegen, ist dieser vorzugsweise an den Anschlussenden des Leitungselements festgelegt, wobei er insbesondere durch zylindrische Ringe gehalten sein kann. Die zylindrischen Ringe dienen insbesondere auch zum Festlegen des Balges, des Agraffschlauchs und gegebenenfalls der Abstandhalter. Durch die Festlegung des Gestrickeschlauchs werden verschiedene Vorteile gleichzeitig erreicht, nämlich nicht nur ein Auflösen des Gestrickes an seinem Ende, wo der Schlauch in der Regel abgeschnitten ist, sondern auch die Sicherstellung der Schutzfunktion des Gestrickeschlauchs über die gesamte Länge des Balgs hin sowie ein weicher Zuganschlag für den Balg als Wegbewegung zum Schutz des Balgs.

Während der Gestrickeschlauch vorzugsweise aus Metalldraht besteht, ist es auch möglich, den Gestrickeschlauch aus temperaturbeständigem Fasermaterial zu fertigen. Das Gestricke kann dabei einfädig oder mehrfädig sein. Durch die ein- bzw. mehrfädige Ausführung des Schlauches kann dessen Flexibilität erhöht bzw. seine Steifigkeit vermindert werden.

Vorzugsweise erstrecken sich die Maschen des Gestrickes im wesentlichen in Axialrichtung des flexiblen Leitungselements. Hierdurch wird die Beweglichkeit des Leitungselements insbesondere in Axialrichtung praktisch nicht beeinträchtigt, da sich die Maschen in Axialrichtung während einer Stauchbewegung frei ineinander verschieben können.

Der Balg des erfindungsgemäßen Leitungselements weist vorzugsweise eine Steifigkeit von etwa 2 bis 5 N/mm auf.

Während grundsätzlich der Agraffschlauch auch außenseitig des Balges angeordnet und in diesem Fall z. B. unmittelbar von dem Gestrickeschlauch umgeben sein kann, ist in bevorzugter Ausführung vorgesehen, dass der Agraffschlauch innenseitig des Balges angeordnet ist.

Nachstehend ist die Erfindung anhand von Ausführungsbeispielen unter Bezugnahme auf die Zeichnungen näher erläutert. Dabei zeigen:
- Fig. 1: eine Seitenansicht eines flexiblen Leitungselements mit einem innenseitig eines Balges angeordneten Agraffschlauch und einem außenseitigen Gestrickeschlauch;
- Fig. 2: eine alternative Ausführungsform des Leitungselements gemäß Fig. 1;
- Fig. 3: eine Detailansicht des Querschnittprofils einer Wicklung bzw. eines Ringsegmentes des Agraffschlauchs des Leitungselements gemäß Fig. 1 oder 2;
- Fig. 4: eine alternative Ausführungsform des Querschnittprofils gemäß Fig. 3;
- Fig. 5: eine Detailansicht mehrerer ineinandergreifender Wicklungen bzw. Ringsegmente des Agraffschlauchs gemäß Fig. 3 im Querschnitt;
- Fig. 6: einen Ausschnitt des Gestrickeschlauchs des Leitungselements gemäß Fig. 1 oder 2 in gestauchtem Zustand;
- Fig. 7: den Gestrickeschlauch gemäß Fig. 6 in ungestauchtem Zustand;
- Fig. 8: eine Seitenansicht eines um einen Agraffschlauch angeordneten Abstandhalters, dessen Streifen in radialer Richtung verlaufen;
- Fig. 9: einen Querschnitt hierzu;
- Fig. 10: eine Seitenansicht eines um einen Agraffschlauch angeordneten Abstandhalters, dessen Streifen in axialer Richtung verlaufen;
- Fig. 11: einen Querschnitt hierzu;
- Fig. 12: eine Variante zu Fig. 10;
- Fig. 13: einen Querschnitt hierzu;
- Fig. 14: eine Seitenansicht eines um einen Agraffschlauch angeordneten Abstandhalters, dessen Streifen schraubengangförmig um die Mantelfläche der Agraffschlauchs verlaufen;
- Fig. 15: einen Querschnitt hierzu und
- Fig. 16: eine Seitenansicht eines in die Abgasleitung eines Kraftfahrzeugs eingebauten Leitungselements gemäß Fig. 1 oder 2.

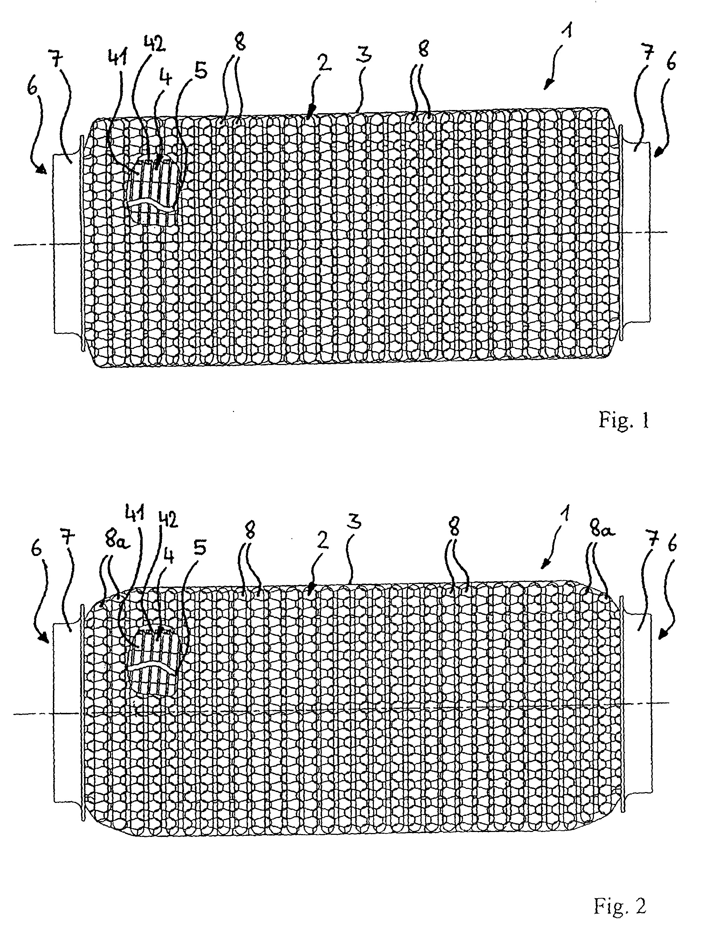

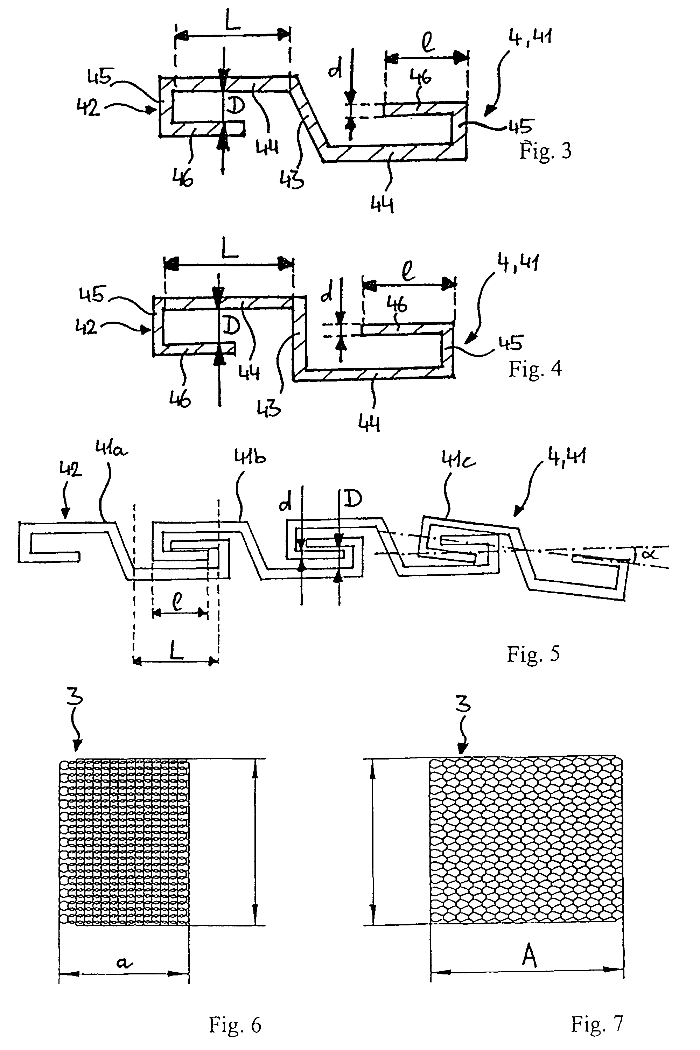

Das in Fig. 1 dargestellte flexible Leitungselement 1 weist einen (lokal ausgebrochen dargestellten) ringgewellten Balg 2 und einen diesen umgebenden Gestrickeschlauch 3 auf, welcher auf den Balg 2 beispielsweise eine Reibungskraft von etwa 2 N bewirkt. Im Innern des Balges 2 ist ein Agraffschlauch 4 angeordnet, welcher in der gezeigten Ausführungsform eine spiralförmige Wicklung 41 mit einem im wesentlichen S-förmigen Querschnittsprofil 42 aufweist, mittels dessen jeweils benachbarte Elemente der Wicklung 41 ineinander eingreifen (vergleiche Fig. 3 bis 5). Alternativ kann der Agraffschlauch von einer Mehrzahl von Ringsegmenten mit einem der spiralförmigen Wicklung 41 entsprechenden Querschnittsprofil gebildet sein, mittels dessen jeweils axial benachbarte Ringsegmente des Agraffschlauchs ineinander greifen (nicht dargestellt).

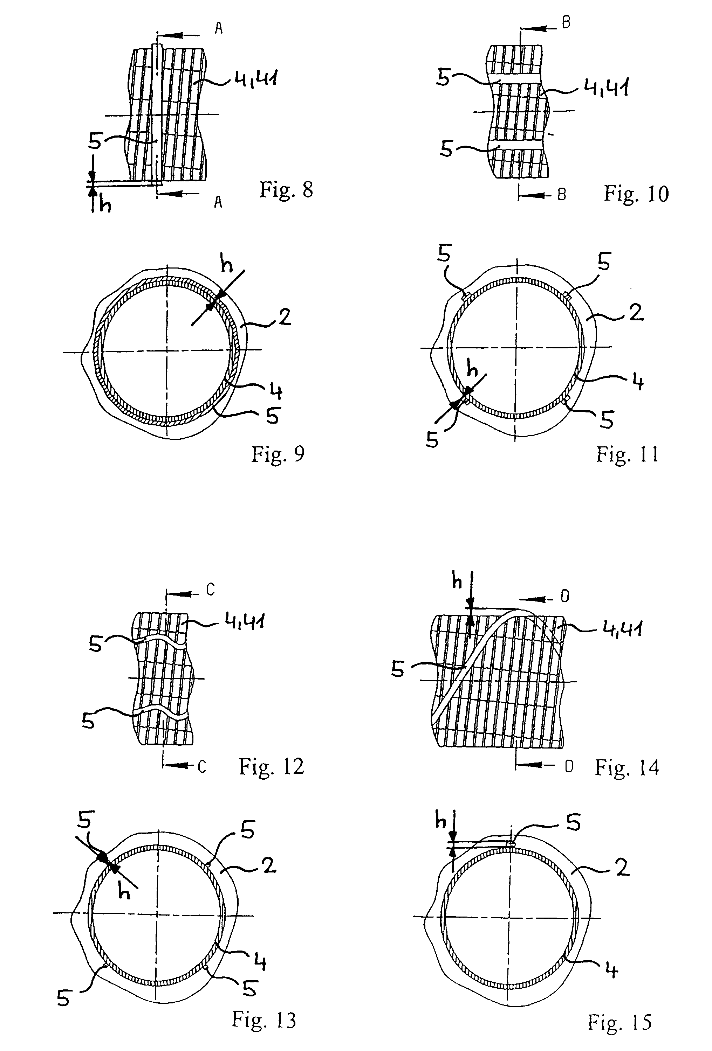

In dem Ringraum zwischen dem Balg 2 und dem Agraffschlauch 4 sind zu deren Bedämpfung durch Streifen gebildete Abstandhalter 5 angeordnet (Fig. 8-15), welche zumindest an den Anschlussenden 6 des Balges 2 über zylindrische Ringe 7 gehalten sind. Die Ringe 7 dienen ferner zum Festlegen des Gestrickeschlauches 3 sowie des gesamten Leitungselements 1 in einer Abgasleitung eines Kraftfahrzeugs. Während die Wellen 8 des Balges 2 gemäß Fig. 1 denselben Durchmesser aufweisen, haben die endständigen Wellen 8a des in Fig. 2 gezeigten Balges 2 einen geringeren Durchmesser als die übrigen Wellen 8 und sind von den Wellen 8 in Richtung der an den Anschlussenden 6 des Balges 2 angeordneten Ringe 7 im Durchmesser abgestuft ausgebildet.

Fig. 3 zeigt eine Detailansicht des Querschnittprofils 42 einer spiralförmigen Wicklung 41 des Agraffschlauchs 4, mittels dessen jeweils axial benachbarte Elemente 41a, 41b, 41c der Wicklung 41 ineinander eingreifen (Fig. 5). Das im wesentlichen S-förmige Querschnittsprofil 42 der Wicklung 41 weist einen zentralen Abschnitt 43 mit zwei jeweils an einem Ende desselben angeordneten, sich jeweils in Axialrichtung des Agraffschlauchs 4 erstreckenden Stegen 44 auf. An die Stege 44 schließt sich jeweils eine sich im wesentlichen in Radialrichtung des Agraffschlauchs 4 erstreckende Brücke 45 an, an die sich wiederum jeweils ein sich in Richtung des zentralen Abschnitts 43 erstreckender, in Axialrichtung des Agraffschlauchs 4 angeordneter und zu den Stegen 44 paralleler endständiger Steg 45 anschließt.

Um für eine hohe Axial-, Radial- und insbesondere Angularbeweglichkeit des Agraffschlauchs 4 bei gleichzeitig guten Entkopplungseigenschaften für Schwingungen sowohl im hochals auch im niederfrequenten Bereich zu sorgen, ist der Radialabstand D der Stege 44, 46 größer als die radiale Stärke d der endständigen Stege 46 und der Axialabstand L zwischen dem zentralen Abschnitt 43 und den Brücken 45 größer als die Axiallänge 1 der endständigen Stege 46. In der gezeigten Ausführung beträgt der Radialabstand D der Stege 44, 46 etwa das Doppelte der radialen Stärke d der endständigen Stege 46 und der Axialabstand L zwischen den Brücken 45 und dem zentralen Abschnitt 43 etwa das 1,5-fache der Axiallänge 1 der endständigen Stege 46.

Wie aus Fig. 5 ersichtlich, ist durch diese Ausbildung des Querschnittprofils 42 der spiralförmigen Wicklung 41 des Agraffschlauchs 4 sichergestellt, dass jeweils benachbarte Elemente 41a, 41b bzw. 41b, 41c der Wicklung 41 sowohl unter axialem als auch radialem Spiel ineinander eingreifen, wobei jeweils benachbarte Elemente 41a, 41b, 41c Axialbewegungen der Länge (L-1) und Radialbewegungen der Länge (D-d) ausführen können. Insbesondere sind auch Angularbewegungen um einen von den jeweiligen Verhältnissen L/1 und D/d abhängigen Winkel α möglich.

Ein Ausschnitt des zum Schutz vor äußeren Einwirkungen des Leitungselements 1 (Fig. 1, 2) vorgesehenen Gestrickeschlauchs 3 ist in Fig. 6 in gestauchtem und in Fig. 7 in ungestauchtem Zustand wiedergegeben. Der an den radial außenliegenden Wellenbergen 8, 8a des Balges 2 anliegende Gestrickeschlauch 3 (Fig. 1, 2) besteht z. B. aus einem Draht unter Bildung von sich in Axialrichtung des Leitungselements 1 erstreckenden, gleichartigen Maschen, wodurch eine gute Beweglichkeit insbesondere in Axialrichtung, aber auch hinsichtlich Radial- und Angularbewegungen gegeben ist und die hohe Flexibilität des Balges 2 in Verbindung mit dem Agraffschlauch 4 nicht nennenswert beeinträchtigt wird. Wie aus Fig. 6 und 7 ersichtlich, ist der Gestrickeschlauch 3 durch Auseinander- bzw. Zusammenschieben der Maschen von einer Länge A (Fig. 7) auf eine Länge a (Fig. 6) komprimierbar, wobei er den Balg 2 (Fig. 1, 2) stets zuverlässig umgibt.

Den Fig. 8 bis 15 sind verschiedene Ausführungsbeispiele der zur Vermeidung einer Geräuschentwicklung durch Kontakt des Balges 2 mit dem Agraffschlauch 4 zwischen diesen vorgesehenen Abstandhalter 5 zu entnehmen.

In den Fig. 8 und 9 ist ein durch Streifen gebildeter Abstandhalter 5 dargestellt, wobei die Streifen mit Axialabstand zueinander ringförmig - innerhalb des Balges 2 (Fig. 1, 2) - um den Agraffschlauch 4 gelegt sind. Während die Abstandhalter 5 gemäß Fig. 10 und 11 sich in Axialrichtung des Agraffschlauchs 4 erstreckende, in Umfangrichtung mit Abstand angeordnete Streifen aufweisen, sind die Streifen der in Fig. 12 und 13 gezeigten Abstandhalter 5 mäanderförmig in Axialrichtung des Agraffschlauchs 4 angeordnet und ebenfalls in Umfangsrichtung voneinander beabstandet. Ein schraubengangförmig um die Mantelfläche des Agraffschlauchs 4 geführter Abstandhalter 5 ist den Fig. 14 und 15 entnehmbar. Die Höhe h der Abstandhalter 5 beträgt bei den gezeigten Ausführungen beispielsweise etwa 5 mm.

Die in den Fig. 8 bis 15 dargestellten Ausführungsbeispiele können selbstverständlich miteinander kombiniert werden, um besonders schwingungsempfindliche Bereiche des Agraffschlauchs 4 gezielt zu dämpfen. Ferner können zusätzlich zu den gezeigten Abstandhaltern 5 weitere Abstandhalter angeordnet sein, deren Streifen beispielsweise in unterschiedlicher Richtung verlaufen, sich z. B. kreuzen.

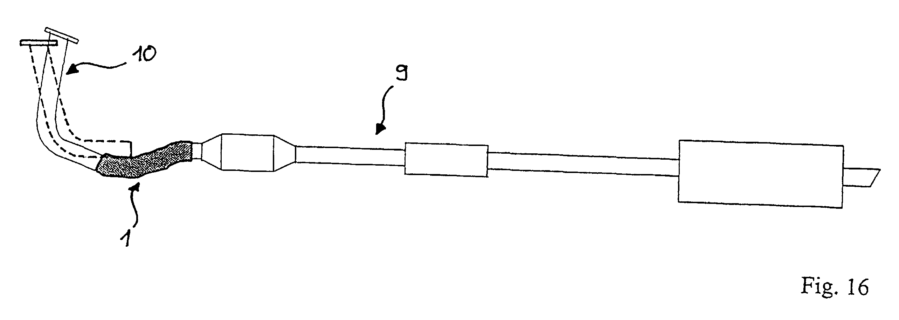

Fig. 16 zeigt ein in eine Abgasleitung 9 eines (nicht dargestellten) Kraftfahrzeuges eingebautes flexibles Leitungselement 1, welches die Abgasleitung 9 mit einem Anschlussstutzen 10 des Motors (nicht gezeigt) verbindet. Aufgrund seiner Gesamtsteifigkeit von etwa 5 N/mm und seiner dadurch bedingten erhöhten Flexibilität ermöglicht das Leitungselement 1 eine feste Anordnung der Abgasleitung 9 am Unterboden des Kraftfahrzeugs, indem es thermisch oder mechanisch bedingt Distanz- und Winkelveränderungen des Anschlussstutzen 10 des Motors (strichligniert dargestellt) bezüglich der festen Abgasleitung 9 zuverlässig aufnimmt.

### Bezugszeichenliste

- 1: flexibles Leitungselement
- 2: Balg
- 3: Gestrickeschlauch
- 4: Agraffschlauch
- 5: Abstandhalter
- 6: Anschlussenden des Leitungselements
- 7: Ringe
- 8, 8a: Wellen des Balges
- 9: Abgasleitung
- 10: Anschlussstutzen
- 41: spiralförmige Wicklung des Agraffschlauchs
- 41a-c: Elemente der spiralförmigen Wicklung
- 42: Querschnittsprofil der Wicklung
- 43: zentraler Abschnitt
- 44: Steg
- 45: Brücke
- 46: endständiger Steg
- D: Radialabstand der Stege
- d: radiale Stärke der endständigen Stege
- L: Axialabstand zwischen zentralem Abschnitt und Brücken
- 1: Axiallänge der endständigen Stege
- h: Höhe des Abstandhalters

## Patentansprüche

1. Flexibles Leitungselement (1), wobei das flexible Teil aus der Kombination eines schraubenförmigen oder ringgewellten Balgs (2), wenigstens eines an den Balg (2) koaxial angrenzenden, spiralförmig gewickelten oder mehrere Ringsegmente aufweisenden Agraffschlauchs (4), eines den Balg (2) umgebenden Überzugs in Form eines Gestrickeschlauchs (3) sowie wenigstens einen zwischen dem Balg (2) und dem Agraffschlauch (4) angeordneten lokalen Abstandhälters (5) besteht, derart, dass das Leitungselement (1) eine Gesamtsteifigkeit von höchstens 5 N/mm aufweist.

2. Leitungselement nach Anspruch 1, **dadurch gekennzeichnet, dass** ein im wesentlichen S-förmiges Querschnittsprofil (42) einer spiralförmigen Wicklung (41) bzw. von Ringsegmenten des Agraffschlauchs (4) einen zentralen Abschnitt (43) mit zwei jeweils an einem Ende desselben angeordneten, sich im wesentlichen in Axialrichtung erstreckenden Stegen (44) aufweist, an die sich jeweils eine sich im wesentlichen in Radialrichtung erstreckende Brücke (45) anschließt, an die sich wiederum jeweils ein sich in Richtung des zentralen Abschnitts (43) erstreckender, im wesentlichen in Axialrichtung angeordneter, endständiger Steg (46) anschließt, wobei der Radialabstand (D) der Stege (44, 46) größer als die radiale Stärke (d) der endständigen Stege (46) und der Axialabstand (L) zwischen dem zentralen Abschnitt (43) und den Brücken (45) größer als die Axiallänge (1) der endständigen Stege (46) ist.

3. Leitungselement nach Anspruch 2, **dadurch gekennzeichnet, dass** das Querschnittsprofil (42) zum Zentrum des zentralen Abschnitts (43) spiegelsymmetrisch ist.

4. Leitungselement nach Anspruch 2 oder 3, **dadurch gekennzeichnet, dass** die Stege (44, 46) parallel in Axialrichtung angeordnet sind.

5. Leitungselement nach einem der Ansprüche 2 bis 4, **dadurch gekennzeichnet, dass** der zentrale Abschnitt (43) eine in Radialrichtung angeordnete Brücke ist.

6. Leitungselement nach einem der Ansprüche 2 bis 4, **dadurch gekennzeichnet, dass** der zentrale Abschnitt (43) eine bezüglich der Radialrichtung geneigt angeordnete Brücke ist.

7. Leitungselement nach Anspruch 6, **dadurch gekennzeichnet, dass** der zentrale Abschnitt (43) jeweils in Richtung der endseitig an demselben angeordneten Stege (44) geneigt ist.

8. Leitungselement nach einem der Ansprüche 2 bis 7, **dadurch gekennzeichnet, dass** der Radialabstand (D) der Stege (44, 46) das 1,1- bis 3-fache, insbesondere das 1,2- bis 2-fache, der radialen Stärke (d) der endständigen Stege (46) beträgt.

9. Leitungselement nach einem der Ansprüche 2 bis 8, **dadurch gekennzeichnet, dass** der Axialabstand (L) zwischen dem zentralen Abschnitt (43) und den Brücken (45) das 1,05- bis 1,9-fache, insbesondere das 1,1- bis 1,8-fache, der Axiallänge (1) der endständigen Stege (46) beträgt.

10. Leitungselement nach einem der Ansprüche 1 bis 9, **dadurch gekennzeichnet, dass** die Höhe der Abstandhalter zwischen 0,3 und 0,8 mm, insbesondere etwa 0,5 mm beträgt.

11. Leitungselement nach einem der Ansprüche 1 bis 10, **dadurch gekennzeichnet, dass** die Abstandhalter (5) streifenförmig sind.

12. Leitungselement nach einem der Ansprüche 1 bis 11, **dadurch gekennzeichnet, dass** die Abstandhalter (5) an wenigstens einem Anschlussende (6) des Leitungselements (1) fest mit dem Balg (2) und/oder dem Agraffschlauch (4) verbunden sind.

13. Leitungselement nach Anspruch 12, **dadurch gekennzeichnet, dass** die Abstandhalter (5) an den Enden (6) des Leitungselements (1) durch zylindrische Ringe (7) gehalten sind.

14. Leitungselement nach einem der Ansprüche 1 bis 11, **dadurch gekennzeichnet, dass** die Abstandhalter (5) lose zwischen dem Balg (2) und dem Agraffschlauch (4) angeordnet sind.

15. Leitungselement nach einem der Ansprüche 11 bis 14, **dadurch gekennzeichnet, dass** die streifenförmigen Abstandhalter (5) in Radialrichtung des Agraffschlauchs (4) angeordnet sind.

16. Leitungselement nach einem der Ansprüche 11 bis 14, **dadurch gekennzeichnet, dass** die streifenförmigen Abstandhalter (5) in Axialrichtung des Agraffschlauchs (4) angeordnet sind.

17. Leitungselement nach einem der Ansprüche 11 bis 14, **dadurch gekennzeichnet, dass** der oder die streifenförmige(n) Abstandhalter (5) schraubengangförmig um die an den Balg (2) angrenzende Mantelfläche des Agraffschlauchs (4) angeordnet sind.

18. Leitungselement nach einem der Ansprüche 11 bis 16, **dadurch gekennzeichnet, dass** die streifenförmigen Abstandhalter (5) symmetrisch um die an den Balg (2) angrenzende Mantelfläche des Agraffschlauchs (4) angeordnet sind.

19. Leitungselement nach einem der Ansprüche 11 bis 16, **dadurch gekennzeichnet, dass** die streifenförmigen Abstandhalter (5) asymmetrisch um die an den Balg (2) angrenzende Mantelfläche des Agraffschlauchs (4) angeordnet sind.

20. Leitungselement nach einem der Ansprüche 1 bis 19, **dadurch gekennzeichnet, dass** die Abstandhalter (5) gekreuzt angeordnet sind.

21. Leitungselement nach einem der Ansprüche 1 bis 20, **dadurch gekennzeichnet, dass** die Abstandhalter (5) mehrlagig angeordnet sind.

22. Leitungselement nach einem der Ansprüche 1 bis 21, **dadurch gekennzeichnet, dass** die Abstandhalter (5) im wesentlichen aus Glas- und/oder Mineralfasern bestehen.

23. Leitungselement nach Anspruch 22, **dadurch gekennzeichnet, dass** das Material der Abstandhalter (5) ein Gewebe oder Geflecht ist.

24. Leitungselement nach Anspruch 22, **dadurch gekennzeichnet, dass** das Material der Abstandhalter (5) ein Vlies, insbesondere ein Streifen-Vlies, ist.

25. Leitungselement nach einem der Ansprüche 1 bis 21, **dadurch gekennzeichnet, dass** die Abstandhalter (5) im wesentlichen aus Metall bestehen.

26. Leitungselement nach Anspruch 25, **dadurch gekennzeichnet, dass** die Abstandhalter (5) aus Draht, Metallkissen, Streckmetall oder Metallschaum bestehen.

27. Leitungselement nach einem der Ansprüche 1 bis 26, **dadurch gekennzeichnet, dass** der Gestrickeschlauch (3) eine Reibungskraft von 0,5 bis 5 N, insbesondere etwa 1 bis 3 N, auf den Balg (2) bewirkt.

28. Leitungselement nach einem der Ansprüche 1 bis 27, **dadurch gekennzeichnet, dass** der Gestrickeschlauch (3) an Anschlussenden (6) des Leitungselements (1) festgelegt ist.

29. Leitungselement nach Anspruch 28, **dadurch gekennzeichnet, dass** der Gestrickeschlauch (3) an den Anschlussenden (6) durch zylindrische Ringe (7) gehalten ist.

30. Leitungselement nach einem der Ansprüche 1 bis 29, **dadurch gekennzeichnet, dass** der Gestrickeschlauch (3) aus temperaturbeständigem Fasermaterial besteht.

31. Leitungselement nach einem der Ansprüche 1 bis 29, **dadurch gekennzeichnet, dass** der Gestrickeschlauch (3) aus Metalldraht besteht.

32. Leitungselement nach einem der Ansprüche 1 bis 31, **dadurch gekennzeichnet, dass** der Gestrickeschlauch (3) ein ein- oder mehrfädriges Gestricke aufweist.

33. Leitungselement nach einem der Ansprüche 1 bis 32, **dadurch gekennzeichnet, dass** sich die Maschen des Gestrickeschlauchs (3) im wesentlichen in Axialrichtung des Leitungselements (1) erstrecken.

34. Leitungselement nach einem der Ansprüche 1 bis 33, **dadurch gekennzeichnet, dass** der Balg (2) eine Steifigkeit von etwa 2 bis 5 N/mm aufweist.

35. Leitungselement nach einem der Ansprüche 1 bis 34, **dadurch gekennzeichnet, dass** der Agraffschlauch (4) innenseitig des Balges (2) angeordnet ist.

## Claims

1. Flexible conduit element (1), wherein the flexible part consists of a combination of a helical or annularly corrugated bellows (2), at least one strip wound hose (4) which is helically wound or comprises several annular segments and which coaxially borders the bellows (2), a cover surrounding the bellows (2) in the form of a knitted hose (3) and at least one local spacer (5) disposed between the bellows (2) and the strip wound hose (4), wherein the conduit element (1) has a total rigidity of not more than 5 N/mm.

2. Conduit element according to claim 1, **characterized in that** a substantially S-shaped cross-sectional profile (42) of a helical winding (41) or of annular segments of the strip wound hose (4) comprises a central section (43) with two bars (44) each disposed at one end thereof and extending substantially in an axial direction, which are each joined by a bridge (45) extending substantially in a radial direction, which is, in turn, joined by a terminal bar (46) disposed substantially in an axial direction and extending towards the central section (43), wherein the radial separation (D) between the bars (44,46) is larger than the radial thickness (d) of the terminal bars (46), and the axial separation (L) between the central section (43) and the bridges (45) is larger than the axial length (I) of the terminal bars (46).

3. Conduit element according to claim 2, **characterized in that** the cross-sectional profile (42) is mirror-symmetrical with respect to the center of the central section (43).

4. Conduit element according to claim 2 or 3, **characterized in that** the bars (44, 46) are disposed parallel and in an axial direction.

5. Conduit element according to any one of the claims 2 through 4, **characterized in that** the central section (43) is a bridge disposed in a radial direction.

6. Conduit element according to any one of the claims 2 through 4, **characterized in that** the central section (43) is a bridge disposed at an angle relative to the radial direction.

7. Conduit element according to claim 6, **characterized in that** the central section (43) is slanted in the direction of the bars (44) disposed at the ends thereof.

8. Conduit element according to any one of the claims 2 through 7, **characterized in that** the radial separation (D) of the bars (44, 46) is between 1.1 to 3 times, in particular 1.2 to 2 times the radial thickness (d) of the terminal bars (46).

9. Conduit element according to any one of the claims 2 through 8, **characterized in that** the axial separation (L) between the central section (43) and the bridges (45) is between 1.05 to 1.9 times, in particular, 1.1 to 1.8 times the axial length (I) of the terminal bars (46).

10. Conduit element according to any one of the claims 1 through 9, **characterized in that** the height of the spacers is between 0.3 to 0.8 mm, in particular approximately 0.5mm.

11. Conduit element according to any one of the claims 1 through 10, **characterized in that** the spacers (5) are strip-shaped.

12. Conduit element according to any one of the claims 1 through 11, **characterized in that** the spacers (5) are rigidly connected to the bellows (2) and/or the strip wound hose (4) at at least one connecting end (6) of the conduit element (1).

13. Conduit element according to claim 12, **characterized in that** the spacers (5) are held at the ends (6) of the conduit element (1) by cylindrical rings (7).

14. Conduit element according to any one of the claims 1 through 11, **characterized in that** the spacers (5) are loosely disposed between the bellows (2) and the strip wound hose (4).

15. Conduit element according to any one of the claims 11 through 14, **characterized in that** the strip-shaped spacers (5) are disposed in a radial direction of the strip wound hose (4).

16. Conduit element according to any one of the claims 11 through 14, **characterized in that** the strip-shaped spacers (5) are disposed in an axial direction of the strip wound hose (4).

17. Conduit element according to any one of the claims 11 through 14, **characterized in that** the strip-shaped spacer(s) (5) is/are disposed in a helical manner about the strip wound hose (4) jacket bordering the bellows (2).

18. Conduit element according to any one of the claims 11 through 16, **characterized in that** the strip-shaped spacers (5) are disposed symmetrically about the strip wound hose (4) jacket bordering the bellows (2).

19. Conduit element according to any one of the claims 11 through 16, **characterized in that** the strip-shaped spacers (5) are disposed asymmetrically around the strip wound hose (4) jacket bordering the bellows (2).

20. Conduit element according to any one of the claims 1 through 19, **characterized in that** the spacers (5) are disposed such that they cross.

21. Conduit element according to any one of the claims 1 through 20, **characterized in that** the spacers (5) are disposed in several layers.

22. Conduit element according to any one of the claims 1 through 21, **characterized in that** the spacers (5) consist essentially of glass and/or mineral fibers.

23. Conduit element according to claim 22, **characterized in that** the material of the spacers (5) is a fabric or mesh.

24. Conduit element according to claim 22, **characterized in that** the material of the spacers (5) is a fleece, in particular a strip fleece.

25. Conduit element according to any one of the claims 1 through 21, **characterized in that** the spacers (5) consist substantially of metal.

26. Conduit element according to claim 25, **characterized in that** the spacers (5) consist of wire, metal cushions, expanded metal or metal foam.

27. Conduit element according to any one of the claims 1 through 26, **characterized in that** the knitted fabric hose (3) applies a frictional force of 0.5 to 5 N, in particular approximately 1 to 3 N, onto the bellows (2).

28. Conduit element according to any one of the claims 1 through 27, **characterized in that** the knitted fabric hose (3) is fixed at the connecting ends (6) of the conduit element (1).

29. Conduit element according to claim 28, **characterized in that** the knitted fabric hose (3) is held at the connecting ends (6) by cylindrical rings (7).

30. Conduit element according to any one of the claims 1 through 29, **characterized in that** the knitted fabric hose (3) is made from temperature-resistant fiber material.

31. Conduit element according to any one of the claims 1 through 29, **characterized in that** the knitted fabric hose (3) is made from metal wire.

32. Conduit element according to any one of the claims 1 through 31, **characterized in that** the knitted fabric hose (3) comprises a knitted fabric made from one or more threads.

33. Conduit element according to any one of the claims 1 through 32, **characterized in that** the meshes of the knitted fabric hose (3) extend substantially in an axial direction of the conduit element (1).

34. Conduit element according to any one of the claims 1 through 33, **characterized in that** the bellows (2) has a rigidity of approximately 2 to 5 N/mm.

35. Conduit element according to any one of the claims 1 through 34, **characterized in that** the strip wound hose (4) is disposed on the inner side of the bellows (2).

## Revendications

1. Elément de conduite flexible (1), cet élément flexible étant constitué par la combinaison d'un tuyau annelé (2) hélicoïdal ou à ondulations annulaires, d'au moins un flexible à agrafes (4) enroulé en spirale ou présentant plusieurs segments annulaires, jouxtant coaxialement le tuyau annelé (2), d'un revêtement sous la forme d'un flexible tricoté (3) entourant le tuyau annelé (2), ainsi que d'au moins un écarteur (5) disposé entre le tuyau annelé (2) et le flexible à agrafes (4), de sorte que l'élément de conduite (1) présente une rigidité totale d'au plus 5 N/mm.

2. Elément de conduite selon la revendication 1, **caractérisé en ce qu'**un profil transversal (42) sensiblement en forme de S d'un enroulement (41) en forme de spirale ou de segments annulaires du flexible à agrafes (4) présente une partie centrale (43) comportant deux ailes (44) disposées chacune à une extrémité de celle-ci et s'étendant dans une direction sensiblement axiale, auxquelles se raccorde à chaque fois un pont (45) s'étendant sensiblement dans la direction radiale, auquel se raccorde à son tour à chaque fois une aile (46) terminale s'étendant en direction de la partie centrale (43), et disposée sensiblement en direction axiale, la distance radiale (D) entre les ailes (44, 46) étant supérieure à l'épaisseur radiale (d) des ailes terminales (46) et la distance axiale (L) entre la partie centrale (43) et les ponts (45) étant supérieure à la longueur axiale (1) des ailes terminales (46).

3. Elément de conduite selon la revendication 2, **caractérisé en ce que** le profil transversal (42) est symétrique en miroir par rapport au centre de la partie centrale (43).

4. Elément de conduite selon la revendication 2 ou 3, **caractérisé en ce que** les ailes (44, 46) sont disposées parallèles dans la direction axiale.

5. Elément de conduite selon l'une quelconque des revendications 2 à 4, **caractérisé en ce que** la partie centrale (43) est un pont disposé en direction radiale.

6. Elément de conduite selon l'une quelconque des revendications 2 à 4, **caractérisé en ce que** la partie centrale (43) est un pont disposé incliné par rapport à la direction radiale.

7. Elément de conduite selon la revendication 6, **caractérisé en ce que** la partie centrale (43) est à chaque fois inclinée en direction des ailes (44) disposées à ses extrémités.

8. Elément de conduite selon l'une quelconque des revendications 2 à 7, **caractérisé en ce que** la distance radiale (D) des ailes (44, 46) correspond à 1,1 à 3 fois, en particulier 1,2 à 2 fois, l'épaisseur radiale (d) des ailes terminales (46).

9. Elément de conduite selon l'une quelconque des revendications 2 à 8, **caractérisé en ce que** la distance axiale (L) entre la partie centrale (43) et les ponts (45) correspond à 1,05 à 1,9 fois, en particulier 1,1 à 1,8 fois, la longueur axiale (1) des ailes terminales (46).

10. Elément de conduite selon l'une quelconque des revendications 1 à 9, **caractérisé en ce que** la hauteur des écarteurs est comprise entre 0,3 et 0,8 mm, plus particulièrement correspond à environ 0,5 mm.

11. Elément de conduite selon l'une quelconque des revendications 1 à 10, **caractérisé en ce que** les écarteurs (5) sont en forme de bandes.

12. Elément de conduite selon l'une quelconque des revendications 1 à 11, **caractérisé en ce qu'**à au moins une extrémité de raccordement (6) de l'élément de conduite (1), les écarteurs (5) sont reliés de manière rigide au tuyau annelé (2) et/ou au flexible à agrafes (4).

13. Elément de conduite selon la revendication 12, **caractérisé en ce que** les écarteurs (5) sont maintenus aux extrémités (6) de l'élément de conduite (1) par des anneaux cylindriques (7).

14. Elément de conduite selon l'une quelconque des revendications 1 à 11, **caractérisé en ce que** les écarteurs (5) sont disposés flottants entre le tuyau annelé (2) et le flexible à agrafes (4).

15. Elément de conduite selon l'une quelconque des revendications 11 à 14, **caractérisé en ce que** les écarteurs (5) en forme de bandes sont disposés dans la direction radiale du flexible à agrafes (4).

16. Elément de conduite selon l'une quelconque des revendications 11 à 14, **caractérisé en ce que** les écarteurs (5) en forme de bandes sont disposés dans la direction axiale du flexible à agrafes (4).

17. Elément de conduite selon l'une quelconque des revendications 11 à 14, **caractérisé en ce que** le ou les écarteur(s) (5) sont disposés en forme d'hélice autour de la surface enveloppe du flexible à agrafes (4) jouxtant le tuyau annelé (2).

18. Elément de conduite selon l'une quelconque des revendications 11 à 16, **caractérisé en ce que** les écarteurs (5) en forme de bandes sont disposés de manière symétrique autour de la surface enveloppe du flexible à agrafes (4) jouxtant le tuyau annelé (2).

19. Elément de conduite selon l'une quelconque des revendications 11 à 16, **caractérisé en ce que** les écarteurs (5) en forme de bandes sont disposés de manière asymétrique autour de la surface enveloppe du flexible à agrafes (4) jouxtant le tuyau annelé (2).

20. Elément de conduite selon l'une quelconque des revendications 1 à 19, **caractérisé en ce que** les écarteurs (5) sont disposés croisés.

21. Elément de conduite selon l'une quelconque des revendications 1 à 20, **caractérisé en ce que** les écarteurs (5) sont disposés en plusieurs couches.

22. Elément de conduite selon l'une quelconque des revendications 1 à 21, **caractérisé en ce que** les écarteurs (5) sont composés essentiellement de fibres de verre et/ou minérales.

23. Elément de conduite selon la revendication 22, **caractérisé en ce que** le matériau constitutif des écarteurs (5) est un tissu ou un treillis.

24. Elément de conduite selon la revendication 22, **caractérisé en ce que** le matériau des écarteurs (5) est un non-tissé, en particulier un non-tissé à bandes.

25. Elément de conduite selon l'une quelconque des revendications 1 à 21, **caractérisé en ce que** les écarteurs (5) sont composés principalement de métal.

26. Elément de conduite selon la revendication 25, **caractérisé en ce que** les écarteurs (5) sont en fil de fer, en coussinets métalliques, en métal étiré ou en mousse métallique.

27. Elément de conduite selon l'une quelconque des revendications 1 à 26, **caractérisé en ce que** le flexible tricoté (3) exerce une force de frottement comprise entre 0,5 et 5 N, en particulier entre environ 1 et 3 N, sur le tuyau annelé (2).

28. Elément de conduite selon l'une quelconque des revendications 1 à 27, **caractérisé en ce que** le flexible tricoté (3) est fixé aux extrémités de raccordement (6) de l'élément de conduite (1).

29. Elément de conduite selon la revendication 28, **caractérisé en ce que** le flexible tricoté (3) est maintenu aux extrémités de raccordement (6) par des anneaux cylindriques (7).

30. Elément de conduite selon l'une quelconque des revendications 1 à 29, **caractérisé en ce que** le flexible tricoté (3) est réalisé dans un matériau fibreux à stabilité thermique.

31. Elément de conduite selon l'une quelconque des revendications 1 à 29, **caractérisé en ce que** le flexible tricoté (3) est en fil métallique.

32. Elément de conduite selon l'une quelconque des revendications 1 à 31, **caractérisé en ce que** le flexible tricoté (3) présente un tricot à un ou plusieurs fils.

33. Elément de conduite selon l'une quelconque des revendications 1 à 32, **caractérisé en ce que** les mailles du flexible tricoté (3) s'étendent sensiblement dans la direction axiale de l'élément de conduite (1).

34. Elément de conduite selon l'une quelconque des revendications 1 à 33, **caractérisé en ce que** le tuyau annelé (2) présente une rigidité d'environ 2 à 5 N/mm.

35. Elément de conduite selon l'une quelconque des revendications 1 à 34, **caractérisé en ce que** le flexible à agrafes (4) est disposé à l'intérieur du tuyau annelé (2).
